# EUROPEAN PATENT APPLICATION

(11) **EP 1 300 777 A1**
(43) Date of publication of application: **09.04.2003**
(21) Application number: 01929989.0
(22) Date of filing: 09.05.2001
(51) Int. Cl.: G06F 17/30, G06F 13/00

(54) **AGENT SYSTEM SUPPORTING BUILDING OF ELECTRONIC MAIL SERVICE SYSTEM**

(30) Priority: 15.05.2000 JP 2000141588
(71) Applicant: Atori Co., Ltd., Tsukuba-shi, Ibaraki 305-0035 (JP)
(72) Inventor: UCHIDA, Rie, Tsukuba-shi, Ibaraki 305-0035 (JP)
(74) Representative: O'Connell, David Christopher
(86) International application number: JP0103856
(87) International publication number: WO01088755

(57) **Abstract**

An agent system for assisting in construction of an e-mail service system comprises a means activated when e-mail is received at a mailbox for fetching the e-mail from the mailbox to extract a process request described in the e-mail, a means for translating the extracted process request into a language for accessing a database referring to a conversion rule dictionary, and passing the translated process request to a database management system, a means for receiving from the database management system a process result obtained by performing the process on the database in accordance with the translated process request and editing the received process result into an e-mail format referring to the conversion rule dictionary, and a means for sending the process result edited into the e-mail format to a desired user as e-mail. The conversion rule dictionary is created by a dictionary editing system.

## Description

### TECHNICAL FIELD

The invention relates to an agent system and method for assisting in construction of an electronic mail service system that uses electronic mail on the Internet to access a database and perform data operation on the database.

### BACKGROUND ART

When a service provider intends to provide an electronic mail (e-mail) service system that uses e-mail over the Internet to access a database and perform data operation such as searching, adding, updating and deleting of data, the service provider needs to develop its own database access processing programs in accordance with service contents to be provided. Alternatively, the service provider may select appropriate packaged database access processing programs providing specific functions. The provider adjusts e-mail formats and service contents in accordance with the specifications of the selected programs.

When the service provider prepares its own database access processing programs in accordance with service contents to be provided, time and cost required to construct an e-mail service system may increase. Technical expertise is required to design, develop or maintain database access processing programs. This poses a barrier to a general Internet user when he/she provides database access services using e-mail.

On the other hand, when the service provider selects packaged database access processing programs providing specific functions, available e-mail formats and service contents may be limited. An e-mail service system satisfying both the service provider and users may not be constructed.

Therefore, an object of the invention is to solve the above-described problems and to construct a database access service system that utilizes e-mail on the Internet easily and with flexibility.

Another object of the invention is to provide a system and method for assisting in construction of an e-mail service system that is available for any e-mail system widely used over the Internet. There is no need to change or reconstruct the existing e-mail system. Moreover, the system and method are implemented with no influence on security functions of the existing e-mail system such as a firewall and encryption.

Another object of the invention is to provide a system and method for assisting in construction of an e-mail service system that is available for any database system. There is no need to change or reconstruct the existing database management system. The system and method are implemented with no influence on security functions of the existing database management system.

Another object of the invention is to provide a flexible system and method for assisting in construction of an e-mail service system in a distributed database environment in which a plurality of databases are distributed over the Internet. The system and method enable simultaneous data operation to be performed on a plurality of databases. The system and method can easily adapt to various types of database access services that may be performed in a distributed database environment.

### DISCLOSURE OF INVENTION

According to one aspect of the invention, an agent system for assisting in construction of an e-mail service system is provided. The e-mail service system comprises a database management system for managing a database and a mail server provided on the Internet. The agent system comprises:
a conversion rule dictionary for storing information for translating a request of a process to be performed on the database described in e-mail into a language for accessing the database, and information for editing a process result obtained from the database management system into e-mail;
a process request extraction means activated when e-mail is received at a predetermined mailbox provided on the mail server, the extraction means fetching the e-mail from the mailbox to extract a process request described in the e-mail;
a process request translation means for translating the extracted process request into the language for accessing the databases referring to the conversion rule dictionary, the translation means passing the translated process request to the database management system;
a process result editing means for receiving from the database management system a process result obtained by performing the process on the databases in accordance with the process request translated into the language for accessing the database, the editing means editing the received process result into an e-mail format referring to the conversion rule dictionary; and
a process result sending means for sending the process result edited into the e-mail format to a desired user as e-mail.

According to the invention, a process request described in e-mail is translated into a language for accessing a database referring to the conversion rule dictionary. A process result obtained by performing the process on the databases is edited into an e-mail format referring to the conversion rule dictionary. Therefore, an e-mail service system that uses e-mail to perform data operation on a database can be easily constructed.

According to another aspect of the invention, a method for assisting in construction of an e-mail service system is provided. The e-mail service system includes a database management system for managing a database and a mail server provided on the Internet. The method comprises the steps of:
defining, in a conversion rule dictionary, information for translating a request of a process to be performed on the database described in e-mail into a language for accessing the database, and information for editing a process result obtained from the database management system into e-mail;
providing a mailbox on the mail server and configuring the mail server so that, when e-mail is received at the mailbox, a program is activated to fetch the e-mail from the mailbox; and
constructing an agent system.

The agent system comprises the functions of:
extracting a process request described in the fetched e-mail;
translating the extracted process request into the language for accessing the database referring to the conversion rule dictionary;
passing the translated process request to the database management system;
receiving from the database management system a process result obtained by performing the process on the database in accordance with the translated process request;
editing the received process result into an e-mail format referring to the conversion rule dictionary; and
sending the process result edited into the e-mail format to a desired user as e-mail.

According to the invention, a process request described in e-mail is translated to a language for accessing a database referring to the conversion rule dictionary. A process result obtained by performing the process on the database is edited to an e-mail format referring to the conversion rule dictionary. Therefore, an e-mail service system that uses e-mail to perform data operation on a database can be easily constructed.

According to another aspect of the invention, a dictionary editing system comprising a conversion rule dictionary and an editing means for editing the conversion rule dictionary is provided. The conversion rule dictionary stores information for translating contents described in e-mail into a language for accessing a database and information for editing contents obtained from a database management system managing the database into e-mail. According to the invention, since informations for translating contents described in e-mail into a language for accessing a database and information for editing contents obtained from the database management system into e-mail can be edited by a dictionary management program, a database access service system that uses e-mail can be easily constructed.

According to another aspect of the invention, a computer-readable storage medium for storing information for translating contents described in e-mail into a language for accessing a database and information for editing contents obtained from a database management system managing the database into e-mail is provided. According to the invention, since information for translating contents described in e-mail into a language for accessing a database and information for editing contents obtained from the database management system into e-mail is stored in the conversion rule dictionary, a database access service system that utilizes e-mail can be easily constructed by using the conversion rule dictionary.

### BRIEF DESCRIPTION OF DRAWINGS

Figure 1 is a block diagram showing a general view of a dictionary editing system in accordance with one embodiment of the invention.
Figure 2 is a block diagram showing a general view of an e-mail service system comprising an agent system in accordance with one embodiment of the invention.
Figure 3 shows a typical e-mail format.
Figure 4 shows a process request format in accordance with one embodiment of the invention.
Figure 5 shows a structure of a product inventory table used in an inventory inquiry system in accordance with one embodiment of the invention.
Figure 6 shows contents of an object dictionary of a conversion rule dictionary used for an inventory inquiry system in accordance with one embodiment of the invention.
Figure 7 shows contents of a process request dictionary of a conversion rule dictionary used for an inventory inquiry system in accordance with one embodiment of the invention.
Figure 8 shows contents of a format dictionary of a conversion rule dictionary used for an inventory inquiry system in accordance with one embodiment of the invention.
Figure 9 shows three kinds of process request formats used for an inventory inquiry system in accordance with one embodiment of the invention.
Figure 10(a) shows a process request mail sent by a user for requesting a Menu, and Figure 10(b) shows a process result mail showing "List of inventory management processes" sent back to the user in response to the process request, in an inventory inquiry system in accordance with one embodiment of the invention.
Figure 11(a) shows a process request mail sent by a user for requesting a Form, and Figure 11(b) shows a process result mail indicating a process request form for "Search inventory by Product number" sent back to the user in response to the process request, in an inventory inquiry system in accordance with one embodiment of the invention.
Figure 12(a) shows a process request mail for "Search inventory by Product number", Figure 12(b) shows a process request mail translated into SQL by an information analysis agent, and Figure 12(c) shows a process result mail for "Search inventory by Product number" sent back to the user in response to the process request, in an inventory inquiry system in accordance with one embodiment of the invention.
Figure 13 is a block diagram showing a general view of an inventory inquiry system comprising an agent system in a distributed database environment in accordance with one embodiment of the invention.
Figure 14 shows a process result mail sent back to a user in an inventory inquiry system in the distributed database environment shown in Figure 13.

### PREFERRED EMBODIMENTS FOR CARRYING OUT THE INVENTION

Preferred embodiments of the invention will be described referring to attached drawings. A method for assisting in construction of an e-mail service system according to the invention is implemented by creating a conversion rule dictionary in a dictionary editing system and by providing an agent system including the created conversion rule dictionary in an existing e-mail system and an existing database system.

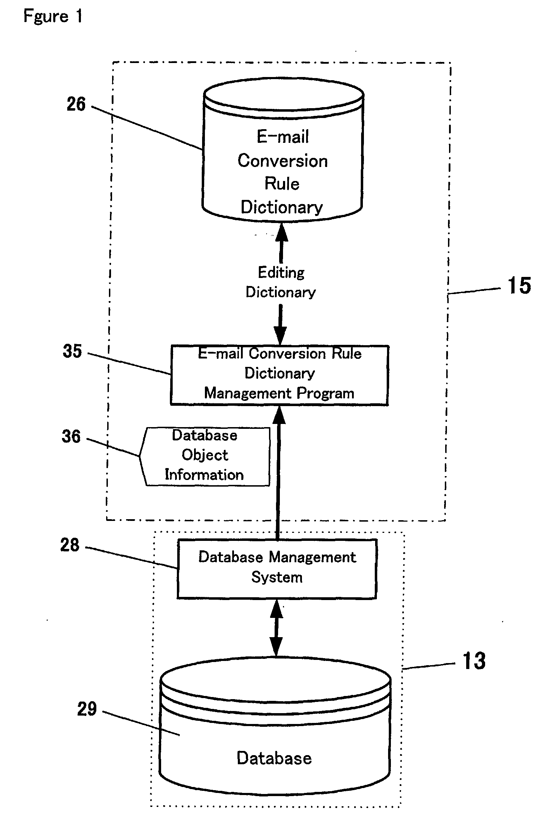

Referring to Figure 1, a method for creating the conversion rule dictionary by the dictionary editing system will be described. Figure 1 shows a block diagram of the dictionary editing system 15. The dictionary editing system 15 comprises an e-mail conversion rule dictionary management program 35 (hereinafter, referred to as a "dictionary management program") and an e-mail conversion rule dictionary 26 (hereinafter, referred to as a "conversion rule dictionary"). The conversion rule dictionary 26 is edited (for example, insertion, update, deletion, etc.) by the dictionary management program 35. The conversion rule dictionary 26 may be created on any storage device.

A database 29 stores data necessary for services provided by an e-mail service system to be constructed. The dictionary management program 35 reads out object information 36 of a database 29 from the database management system 28 that manages the database 29, and registers the object information 36 to the conversion rule dictionary 26. The database management system 28 manages various objects of the database 29. The object information 36 may include any information such as tables, views, columns, index names, and attributes. The object information 36 may also include conditions to use the database objects, and descriptions indicating contents of data operation to be performed such as search conditions, combination conditions, sorting and grouping of data, arithmetic operation, and functions. For example, when SQL is adopted in the database management system 28 as a database access language, a search condition may be described using the "WHERE" clause. The order of search results may be specified using the "ORDER BY" clause. The object information 36 may include such descriptions. A data processing procedure may be registered as a "procedure". An arithmetic expression to be repeatedly used may be registered as a "function".

The program 35 defines user object information corresponding to the above object information. The user object information is used for a description in e-mail. Thus, information for translating a process request described in e-mail into a language (in this example, SQL (Structured Query Language)) for accessing the database 29 is defined in the conversion rule dictionary 26.

Furthermore, the dictionary management program 35 defines in the conversion rule dictionary 26 information for editing a process result obtained from the database management system 28 into e-mail. For example, format information for editing a process result into e-mail is defined.

In addition to such information, the dictionary management program 35 may register to the conversion rule dictionary 26 information used by an agent system in accordance with the invention. For example, the conversion rule dictionary 26 may include menu information for a list of services provided to a user through the e-mail service system. Moreover, the dictionary management program is capable of querying, updating and deleting dictionary information registered in the conversion rule dictionary 26. Thus, the conversion rule dictionary 26 can be easily edited.

Next, a method for constructing an e-mail service system by providing an agent system including the conversion rule dictionary 26 thus created in an existing e-mail system and an existing database system will be described.

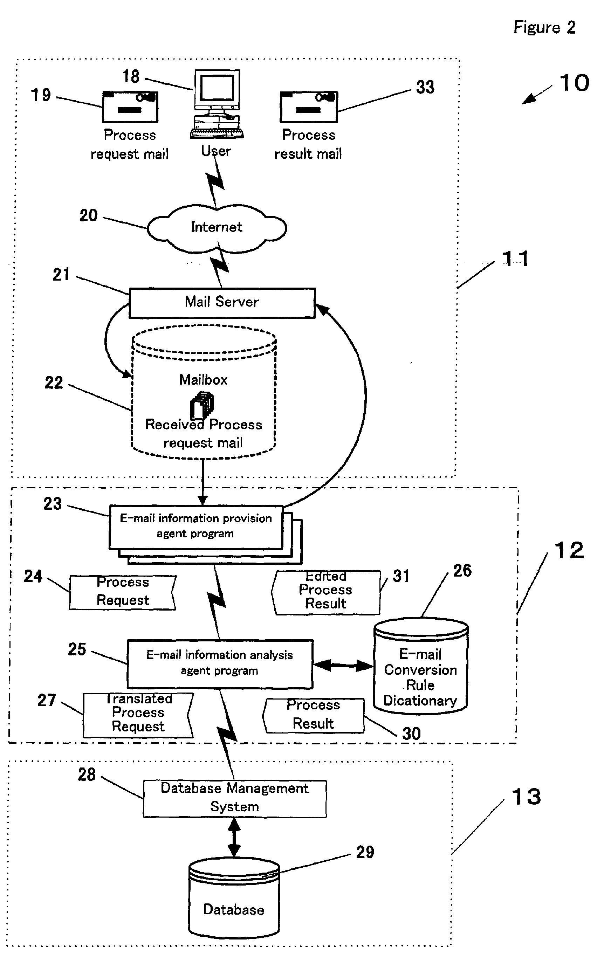

Figure 2 shows a general block diagram of an e-mail service system 10 in which an agent system 12 in accordance with one embodiment of the invention is provided in an existing e-mail system 11 and an existing database system 13.

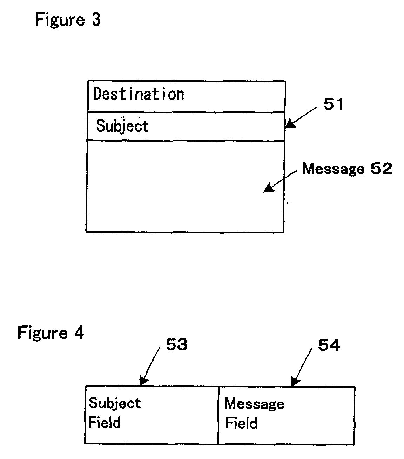

Any existing e-mail system currently used over the Internet can be used as the e-mail system 11 with no modification. Figure 3 shows a typical e-mail format used in the e-mail system 11. A mailbox 22 used for services provided by the e-mail service system 10 to be constructed is created on any mail server 21 of the e-mail system 11. A user 18 describes a process request in a subject column 51 and/or a message column 52 of e-mail and specifies an address of the mailbox 22 as a destination. Thus, the user 18 can send a process request mail 19 to the mailbox 22 through the Internet 20.

The database system 13 can be any existing database system widely used. As described above referring to Figure 1, the database system 13 comprises the database management system 28 and the database 29. The database 29 stores data necessary for services provided by the e-mail service system 10. The database management system 28 processes a request of a process to be performed on the database 29 and outputs a result of the process.

The agent system 12 in accordance with the invention is provided in the existing e-mail system 11 and the existing database system 13. The agent system 12 serves as an agent between the existing e-mail system 11 and the existing database system 13 to perform a processing procedure in which a database access process through e-mail is implemented. More specifically, the agent system 12 allows the user 18 to perform data operation on the database 29 through e-mail and allows the user 18 to be informed of a result of the process from the database management system 28 through e-mail. A configuration and functions of the agent system 12 will be described.

The agent system 12 comprises an e-mail information provision agent program (hereinafter, referred to as an "information provision agent") 23, an e-mail information analysis agent program (hereinafter, referred to as an "information analysis agent") 25 and the conversion rule dictionary 26. As described above referring to Figure 1, dictionary information is defined in the conversion rule dictionary 26 by the dictionary management program 35.

It is preferable that the information provision agent 23 is provided corresponding to the mail server 21 and that the information analysis agent 25 is provided corresponding to the database management system 28. In the embodiment, the information provision agent 23 runs on a machine in which the mail server 21 is provided. The information analysis agent 25 is resident in a database server machine in which the database management system 28 is installed, and runs as a server program. However, the invention is not limited to such implementation. Alternatively, the information provision agent 23 and the information analysis agent 25 may be activated on a machine different from the machine in which the mail server 21 or the database management system 28 is installed. The information provision agent 23 and the information analysis agent 25 may be implemented as a single program. The program may be activated on a machine in which the mail server 21 is installed, a database server machine or other machines.

The information provision agent 23 is previously set in the mail server 21 so that every time a process request mail 19 is received at the mailbox 22 provided for the e-mail service system 10, the information provision agent 23 is activated to fetch the received mail 19 from the mailbox 22. Such configuration may be implemented by using a function commonly provided by a mail server such as an alias of a typical mail server "sendmail" with no modification. Therefore, the information provision agent 23 can fetch a desired process request mail 19 from the predetermined mailbox 22 without changing a configuration and an operating environment of the existing mail server, and without changing security functions of the existing e-mail system such as firewall, encryption and filtering.

When a plurality of process request mails 19 are received at the mailbox 22, it is preferable that the information provision agent 23 is activated corresponding to each of the process request mails 19. The information provision agent 23 extracts a "process request" 24 from the fetched process request mail 19, passes it to the information analysis agent 25, and waits for a reply from the information analysis agent 25. A timeout may be set when the information analysis agent 23 waits for the reply from the information analysis agent 25. If there is no reply from the information analysis agent 25 after a predetermined time has elapsed, the information provision agent 23 may send to the user 18 a reply message indicating that the timeout has occurred.

Figure 4 shows an exemplary format of the process request 24 delivered to the information analysis agent. The process request 24 comprises a subject field 53 and a message field 54. The information provision agent 23 sets in the subject field 53 the contents described in the subject column 51 of e-mail shown in Figure 3, and sets in the message field 54 the contents described in the message column 52 of the e-mail.

The information analysis agent 25 translates the process request 24 received from the information provision agent 23 into a language (SQL in the embodiment) for accessing the database 29 referring to the conversion rule dictionary 26. The agent 25 then passes the process request translated into SQL to the database management system 28. After the process request 27 has been processed on the database 29, the information analysis agent 25 receives a process result 30 from the database management system 28. The agent 25 edits the received process result 30 into an e-mail format referring to the conversion rule dictionary 26 and passes the edited process result 31 to the information provision agent 23 waiting for the reply. The information provision agent 23 receives the edited process result 31. The agent 23 adds a header containing an address and other information to the received process result 31 to generate a process result mail 33. The agent 23 sends the mail 33 to the user 18.

By constructing the agent system 12 having functions as described above and by providing the agent system 12 in the existing e-mail system 11 and database system 13, the e-mail service system 10 that performs data operation on the database can be easily constructed.

An example in which the e-mail service system 10 shown in Figure 2 is an inventory inquiry system providing inventory inquiry services will be described in detail. The inventory inquiry system is constructed by a method including creating the conversion rule dictionary 26 for the inventory inquiry system and providing the agent system 12 comprising the conversion rule dictionary 26. It should be noted, however, that the agent system 12 in accordance with the invention is not limited to the embodiment and may be applied to any e-mail service system that accesses a database.

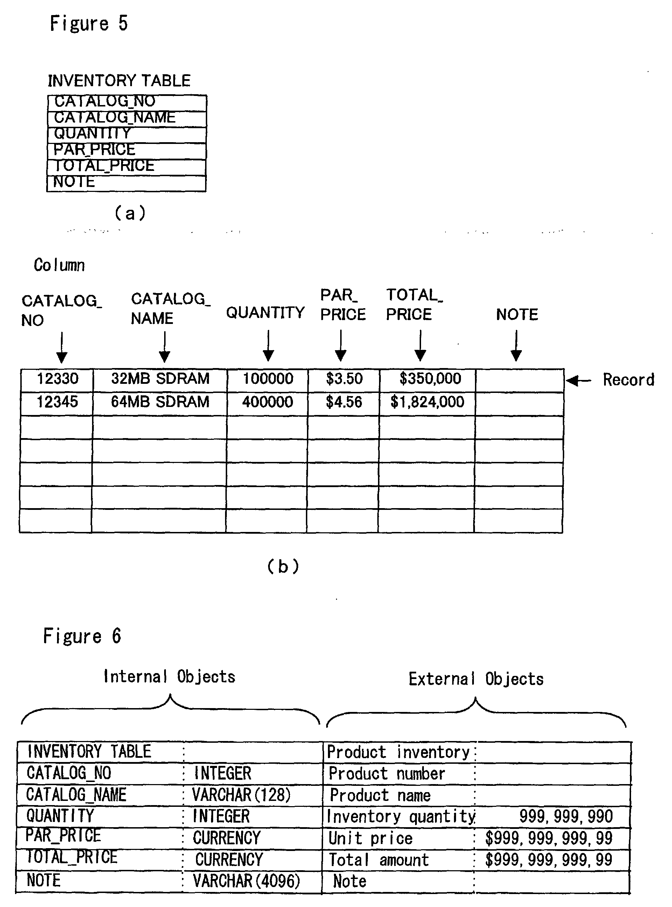

In the inventory inquiry system 10, it is assumed that the database 29 shown in Figure 1 is a product inventory table. As shown in Figure 5(a), the product inventory table 29 is registered in the database management system 28 as a table name "INVENTORY TABLE". Names of columns included in the product inventory table 29 are registered in the database management system 28 as "CATALOG_NO", "CATALOG_NAME",..., etc. Figure 5(b) shows an example of data stored in the "INVENTORY TABLE". Two data records are shown.

The conversion rule dictionary 26 used for the inventory inquiry system 10 is first created. A method for creating the conversion rule dictionary 26 will be described referring to Figures 1 and 5 through 8. The conversion rule dictionary 26 in the embodiment includes an object dictionary 41, a process request dictionary 42, and a format dictionary 43.

The object dictionary 41 stores a correspondence between an object of the product inventory table 29 and an object used for a description in e-mail. In order to create the object dictionary 41, the dictionary management program 35 inquires of the database management system 28 by a query command (for example, SELECT command of SQL) to obtain objects 36 of the product inventory table 29. The program 35 then registers the obtained objects 36 to the conversion rule dictionary 26 as internal objects. The objects 36 include a table name of "INVENTORY TABLE" and column names of "CATALOG_NO", "CATALOG_NAME",..., etc. The objects may additionally include other objects such as views, indexes, database functions and procedures.

The dictionary management program 35 further registers objects used for a description in e-mail to the conversion rule dictionary 26 as external objects. Thus, a correspondence between the internal object used in the database management system 28 and the external object used in e-mail is stored in the object dictionary 41.

Figure 6 shows contents of the object dictionary 41 thus created. For example, the external object "Product inventory" corresponds to the internal object "INVENTORY TABLE". The external object "Product number" corresponds to the internal object "CATALOG_NO".

The object dictionary 41 may include attribute information for the internal and external objects. For example, as shown in Figure 6, the data type (for example, character type, numeric type) of each of the external object may be registered to match the data type of the corresponding internal object extracted from the database management system 28. Thus, e-mail can be edited to adapt to the data type of each of the external objects.

Next, the process request dictionary 42 is created. The process request dictionary 42 stores, for each "process name", contents of the process. The process contents may include a corresponding process type (such as select, update, delete, etc.), tables and columns to be processed, and process conditions. The process contents can be registered in the process request dictionary 42 as the external object through the dictionary management program 35.

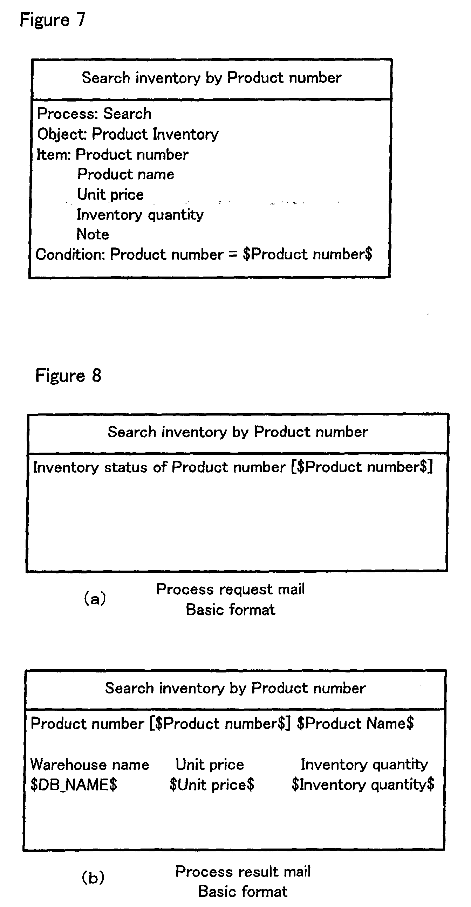

Figure 7 shows contents of the process request dictionary 42 when the "process name" is "Search inventory by Product number". Figure 7 shows the process contents of searching data included in columns "Product number", "Product name", "Unit price", "Inventory quantity" and "Note" of records that meet the process condition of "Product number=$Product number$" in the "Product inventory" table when the process name "Search inventory by Product number" is described in the process request mail 19. The process condition may be described by using a simple language dedicated to registration to the conversion rule dictionary 26. In the example in Figure 7, "$" indicates a parameter in which a parameter value described in the process request mail 19 is set. The symbol "$" is merely one example. Other special characters distinguishable as parameters may be used.

The process name of "Search inventory by Product number" and the corresponding "SEL_INV_WITH_CATALOG_NO" (This name is used to identify the process name. Any appropriate name may be used) can be registered to the object dictionary 41 as the external object and the internal object, respectively. Also, the process "Search" and the corresponding SQL data manipulation language "SELECT" can be registered to the object dictionary 41 as the external object and the internal object, respectively. Thus, the process contents shown in Figure 7 can be assembled into SQL referring to the object dictionary 41.

Next, the format dictionary 43 is created. The format dictionary 43 includes, for each "process name", a "process request mail basic format" that is used when a user makes a request for performing a process and a "process result mail basic format" that is used when the user is informed of a result of the process.

Figures 8(a) and 8(b) show the "process request mail basic format" and "process result mail basic format", respectively, when the "process name" is "Search inventory by Product number". Figure 8(a) is an e-mail format sent back to a user when the user has requested a form of "Search inventory by Product number". The user uses the form to make a request for processing of "Search inventory by Product number". In this process request form, "Search inventory by Product number" is described in the subject column and "Inventory status of Product number [$Product number$]" is described in the message column. As described above, "Product number" between "$"s is a parameter in which a user sets a desired value.

After a user has described a value in the parameter of the " process request mail basic format" and sent it, a process result is sent back to the user. Figure 8(b) shows a form of the process result. The portions between "$"s are parameters in which the analysis agent 25 sets values.

Thus, the object dictionary 41, the process request dictionary 42 and the format dictionary 43 are created in the conversion rule dictionary 26. In addition, in the embodiment, "List of inventory management processes" including a list of services provided for a user is registered to the conversion rule dictionary 26. Moreover, a user ID, a password, a decryption key and so on for user authentication may be registered to the conversion rule dictionary 26, as needed.

Thus, the conversion rule dictionary 26 and the dictionary management program 35 allow a user to easily define data operation performed on the database 29 without expertise in the database 29, database management system 28, and programming for the database, such as knowledge of a structure of the database and a language for accessing the database. In regard to the database 29 and database management system 28, it is preferable that, when the conversion rule dictionary 26 is created, only information necessary for data operation through e-mail is disclosed to a service provider. Thus, security when a database on the Internet is used can be secured.

Next, as described above, the mailbox 22 used for the inventory inquiry system 10 is created in the mail server 21. The mail server 21 is configured so that the information provision agent 23 is activated to fetch e-mail from the mailbox 22 when the e-mail is received at the mailbox 22.

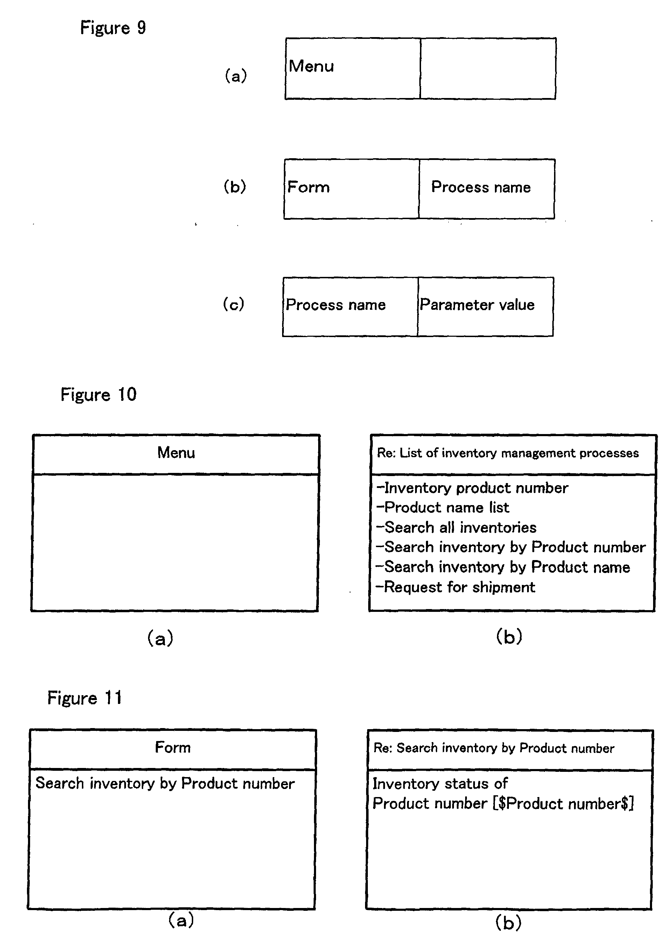

In the agent system 12 of the inventory inquiry system 10, three kinds of formats are defined for the process request 24 (Figure 2). Figure 9 shows the three process request formats. In the inventory inquiry system 10, in addition to a process request (shown in Figure 9(c)) with which data operation on the database 29 is actually performed, two process request formats are defined (Figures 9(a) and 9(b)) in order to enhance ease of use of the inventory inquiry system.

Figure 9(a) shows a format in which "Menu" is described in the subject column of e-mail, indicating that a user requests a list of services provided. When the information analysis agent 25 reads out "Menu" from the process request 24, it accesses "List of inventory management processes" registered in the conversion rule dictionary 26.

Figure 9(b) shows a format in which "Form" is described in the subject column and "Process name" is described in the message column of e-mail. Here, "Process name" corresponds to one of service names included in the above service list. This process request indicates that a form for making a request for processing of a process corresponding to the specified "Process name" is requested. When the information analysis agent 25 reads out "Form" from the process request, it accesses the format dictionary 43 included in the conversion rule dictionary 26.

Figure 9(c) shows a format in which "Process name" is described in the subject column and "Parameter value" is described in the message column. "Parameter value" in this form corresponds to the value described in the parameter shown in the above Figure 8(a). This process request indicates that performing a process corresponding to the "Process name" under the condition specified by the "Parameter value" is requested. When the information analysis agent 25 reads out "Process name" from the process request 24, it accesses the process request dictionary 42 and the object dictionary 41 included in the conversion rule dictionary 26. The process request format of Figure 9(c) allows data operation on the database 29 to be actually performed.

"Menu" and "Form" used in the inventory inquiry system 10 are conventions specific to the system. Any other conventions may be used in other systems. Moreover, formats of the process request are not limited to the above three formats. Any other kinds of formats may be used.

Next, referring to Figures 2 and 10 through 12, operation of the inventory inquiry system 10 in which the agent system 12 including the conversion rule dictionary 26 created as described above is provided will be described.

A user 18 describes "Menu" in the subject column as shown in Figure 10(a) and specifies an address of the mailbox 22 in a destination field (not shown) to create a process request mail 19. The mail is sent. When the mail 19 is delivered to the mailbox 22, the information provision agent 23 is activated in accordance with the configuration of the mail server. The mail 19 is passed to the activated information provision agent 23.

The information provision agent 23 performs operation such as analyzing header contents of the process request mail 19 for user authentication, as needed. The provision agent 23 then reads out "Menu" described in the subject column of the process request mail 19. The provision agent 23 generates the process request 24 as shown in Figure 9(a) and sends it to the information analysis agent 25. The provision agent 23 also reads header information containing, for example, an address of the user 18 from the process request mail 19 and stores it in a memory (not shown).

The information analysis agent 25 reads out "Menu" from the received process request 24. The analysis agent 25 accesses "List of inventory management processes" of the conversion rule dictionary 26 to obtain a service list included in the "List of inventory management processes". The information analysis agent 25 sets "List of inventory management processes" in the subject column and sets the service list included in the "List of inventory management processes" in the message column to generate an edited process result 31 in an e-mail format as shown in Figure 10(b). The edited process result 31 is sent to the information provision agent 23. The information provision agent 23 receives the edited process result 31. The provision agent 23 adds a header including, for example, the user address stored in the memory to the process result 31 to generate a process result mail 33. The agent 23 sends the mail 33 to the user 18.

The user receives the process result mail 33 in which "List of inventory management processes" is described in its subject column. The user 18 describes "Form" in the subject column, describes in the message column "Search inventory by Product number" that is a service selected from the received "List of inventory management processes", and specifies the address of the mailbox 22 as a destination to generate a process request mail 19, as shown in Figure 11(a). The user sends the process request mail 19 thus generated. When the process request mail 19 is delivered to the mailbox 22, the information provision agent 23 is activated. The process request mail 19 is passed to the provision agent 23. The provision agent 23 reads contents described in the subject and message columns of the received process request mail 19. The provision agents 23 generates a process request 24 in which "Form" is set in the subject field 53 and "Search inventory by Product number" is set in the message field 54, as shown in Figure 9(b). The generated process request 24 is sent to the information analysis agent 25. As described above, the information provision agent 23 reads header information including, for example, an address of the user 18 from the process request mail 19 and stores it in a memory.

The information analysis agent 25 reads out "Form" and "Search inventory by Product number" from the received process request 24. The information analysis agent 25 searches the format dictionary 43 of the conversion rule dictionary 26 by a keyword of "Search inventory by Product number" to extract the process request mail basic format corresponding to "Search inventory by Product number" (Figure 8(a)).

The analysis agent 25 edits the extracted process request mail basic format for "Search inventory by Product number" into an e-mail format shown in Figure 11(b). The edited process result 31 is sent to the information provision agent 23. As described above, the information provision agent 23 adds an appropriate header to the edited process result 31 to generate a process result mail 33. The agent 23 sends the mail 33 to the user 18.

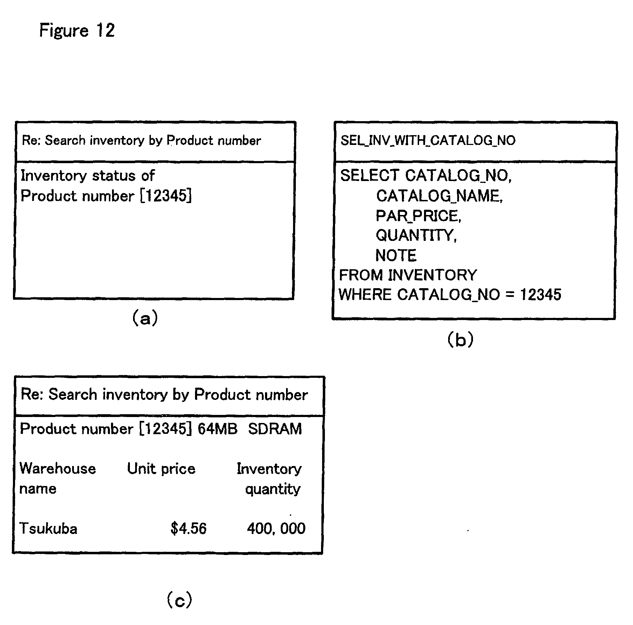

The user receives the process request mail 33 in which a process request form used for "Search inventory by Product number" is described (Figure 11(b)). The parameter is represented by "Product number" between "$"s. The user 18 sets a desired parameter value or a desired product number "12345" in the parameter of the process request form, as shown in Figure 12(a). The user also specifies the address of the mailbox 22 as a destination. The process request mail 19 thus generated is sent. When the process request mail 19 is delivered to the mailbox 22, the information provision agent 23 is activated. The mail 19 is passed to the provision agent 23.

The information provision agent 23 reads out contents described in the subject and message columns of the received process request mail 19. The agent 23 generates a process request mail 24 shown in Figure 9(c) in which "Search inventory by Product number" is set in the subject field 53 and "12345" is set in the message field 54. The generated process request mail 24 is sent to the information analysis agent 25.

The information analysis agent 25 reads out the process name and the parameter value, that is, "Search inventory by Product number" and "12345", from the received process request 24. Then, the information analysis agent 25 searches the process request dictionary 42 of the conversion rule dictionary 26 by a keyword of "Search inventory by Product number" to extract the process contents (Figure 7) corresponding to "Search inventory by Product number". The analysis agent 25 sets "12345" in the parameter of the extracted process contents. The analysis agent 25 then translates the extracted process contents into SQL referring to the object dictionary 41 of the conversion rule dictionary 26.

Figure 12(b) shows the translated process contents. As can be seen with reference to Figure 7, the process name "Search inventory by Product number" is translated into "SEL_INV_WITH_CATALOG_NO". The process "search" is translated into "SELECT". The process object "product inventory" is translated into "FROM INVENTORY". The process items "Product number", "Product name", "Unit price", "Inventory quantity" and "Note" are translated into "CATALOG_NO", "CATALOG_NAME", "PAR_PRICE", "QUANTITY" and "NOTE", respectively. The process condition "Product Number=12345" is translated into "WHERE CATALOG_NO =12345". Thus, the information analysis agent 25 assembles the SQL statements corresponding to the process contents. The information analysis agent 25 passes the process contents 27 represented by the SQL statements to the database management system 28.

If the translation into SQL ended in failure, the information analysis agent 25 may edit reply mail including a failure message in an e-mail format and send the edited reply mail to the information provision agent 23.

The database management system 28 performs the SQL statements shown in Figure 12(b) on the database 29 and returns a process result 30 to the information analysis agent 25. The information analysis agent 25 searches the format dictionary 43 of the conversion rule dictionary 26 by a keyword of "Search inventory by Product number" to obtain the "process result mail basic format" (Figure 8(b)). The analysis agent 25 edits the process result 30 into an e-mail format by setting the process result 30 obtained from the database management system 28 in parameters indicated by "$"s in the format. Figure 12(c) shows the process result 31 thus edited. The information analysis agent 25 passes the edited process result 31 to the information provision agent 23. It should be noted that a format used for the edited process result 31 may be any appropriate form such as a text format, an HTML format or an XML format. The information provision agent 23 adds an appropriate header such as an address to the edited process result 31 to generate a process result mail 33. The agent 23 sends the generated mail 33 to the user 18.

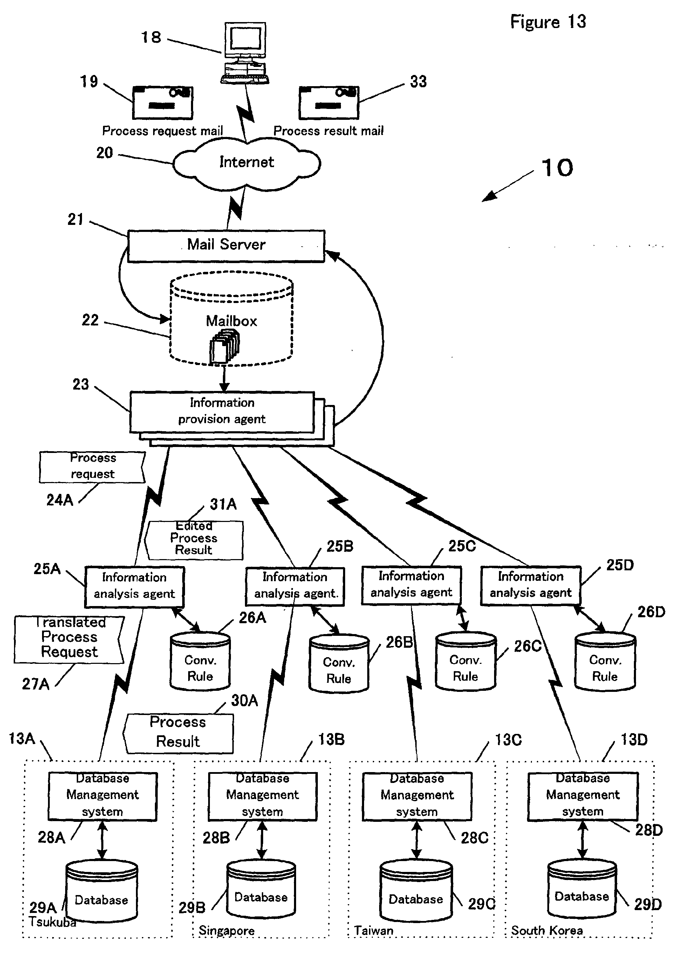

Referring to Figure 13, an embodiment in which the above inventory inquiry system is implemented in a distributed database environment with a plurality of databases being distributed will be described. In the embodiment, database systems 13A through 13D are provided in four locations of Tsukuba, Singapore, Taiwan and South Korea, respectively. Each of the database systems 13A through 13D is connected to the Internet. The information provision agent 23 is provided corresponding to the mail server 21. The information analysis agent 25 and conversion rule dictionaries 26 are provided corresponding to each of the database management systems 28A through 28D. A user 18 issues process requests to these four database management systems simultaneously so that inventory information at these four sites can be obtained at a time. The user 18 obtains the process request form of "List of inventory management processes" and then obtains the process request form of "Search inventory by Product number" in accordance with the above-described manner referring to Figure 2. The user 18 describes a value in the parameter of the form and sends the process request mail 19 to the mailbox 22. When the process request mail 19 is delivered to the mailbox 22, the information provision agent 23 is activated. The information provision agent 23 generates a process request 24 in which "Search inventory by Product number" is set in the subject field 53 and "12345" is set in the message filed 54, in accordance with the above-described manner. Since the process request 24 is generated for each site, the process requests 24A through 24D are sent to the information analysis agents 25A through 25D located at the four sites, respectively.

The information analysis agents 25A through 25D refer to the corresponding conversion rule dictionaries 26A through 26D to translate the process requests 24A through 24D into SQL statements in accordance with the above-described manner, respectively. The translated process requests 27A through 27D are passed to the database management systems 28A through 28D, respectively. The database management systems 28A through 28D perform data operation on the corresponding product inventory tables 29A through 29D in accordance with the translated process requests 27A through 27D, respectively. Process results 30A through 30D are returned to the information analysis agents 25A through 25D, respectively.

The information analysis agents 25A through 25D refer to the conversion rule dictionaries 26A through 26D to edit the process results 30A through 30D into e-mail formats in accordance with the above-described manner, respectively. The edited process results 31A through 31D are sent to the information provision agent 23.

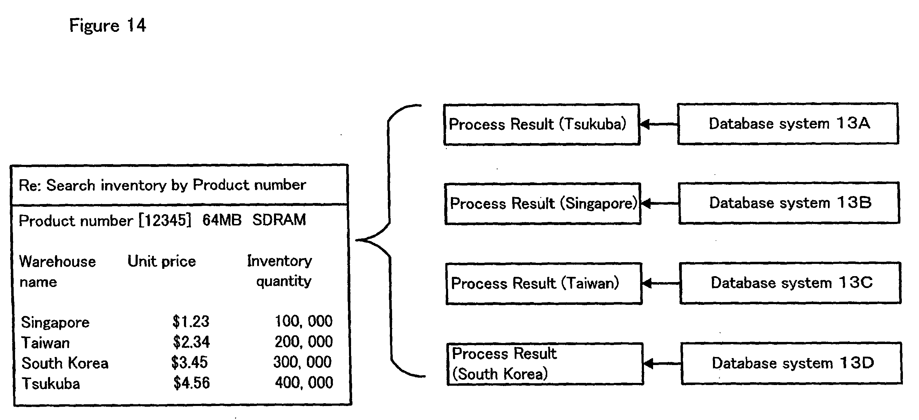

The information provision agent 23 receives the edited process results 31A through 31D from the four information analysis agents 25A through 25D. The provision agent 23 then edits the four process results into a single process result mail 33. The mail 33 is sent to the user 18. Figure 14 shows the process result mail 33. It should be noted that editing into the single process result mail 33 is optional. Any format into which process results are edited may be used. When there is no process result reply from any of the database management systems 28A through 28D, the information provision agent 23 may edit only available process results and inform the user 18 of it.

As described above, the agent system according to the invention is applicable to the inventory inquiry system. The agent system can also assist in constructing various e-mail service systems that perform data operation such as inquiry, registration, updating and deletion on a database. The agent system is available in an e-mail service system for various applications such as online product sales, compiling and referring to results for various questionnaires, product support, usage in a help desk, accepting applications for seminars and events and summarizing things related to the seminars and events, inventory confirmation and ordering processing system, usage in groupware for event schedule, bulletin board and facility reservation, reservation management for hotels and so on.

According to the invention, an e-mail service system that uses e-mail to access a database at any location on the Internet and perform data operation on the database can be easily constructed. An agent system according to the invention allows an existing e-mail system and an existing database system widely used over the Internet to be utilized with no modification for constructing an e-mail service system. Therefore, productivity and availability in constructing an e-mail service system can be improved. Moreover, an agent system according to the invention allows an e-mail service system to be constructed easily even in a distributed database environment in which a plurality of databases are distributed.

## Claims

1. An agent system for assisting in construction of an e-mail service system, the e-mail service system comprising a database management system for managing a database and a mail server provided on the Internet, the agent system comprising:
a conversion rule dictionary storing information for translating a request of a process to be performed on the database described in e-mail into a language for accessing the database, and information for editing a result of the process obtained from the database management system into e-mail;
a process request extraction means activated when e-mail is received at a predetermined mailbox provided on the mail server, the extraction means fetching the e-mail from the mailbox to extract a process request described in the e-mail;
a process request translation means for translating the extracted process request to the language for accessing the database referring to the conversion rule dictionary, the translation means passing the translated process request to the database management system;
a process result editing means for receiving from the database management system a process result obtained by performing the process on the database in accordance with the process request translated into the language for accessing the database, the editing means editing the received process result into an e-mail format referring to the conversion rule dictionary;
a sending means for sending the process result edited into the e-mail format to a desired user as e-mail.

2. A method for assisting in construction of an e-mail service system, the e-mail service system comprising a database management system for managing a database and a mail server provided on the Internet, the method comprising the steps of:
defining, in the conversion rule dictionary, information for translating a request of a process to be performed on the database described in e-mail into a language for accessing the database, and information for editing a process result obtained from the database management system into e-mail;
providing a mailbox on the mail server and configuring the mail server so that, when e-mail is received at the mailbox, a program is activated to fetch the e-mail from the mail box; and
constructing the agent system;
wherein the agent system comprises the functions of:
extracting a process request described in the fetched e-mail;
translating the extracted process request into the language for accessing the database referring to the conversion rule dictionary;
passing the translated process request to the database management system;
receiving from the database management system a process result obtained by performing the process on the database in accordance with the translated process request;
editing the received process result into an e-mail format referring to the conversion rule dictionary; and
sending the process result edited into the e-mail format to a desired user as e-mail.

3. A dictionary editing system comprising:
a conversion rule dictionary for storing information for translating contents described in e-mail into a language for accessing a database, and information for editing contents obtained from a database management system into e-mail, the database management system managing a database; and
a means for editing the conversion rule dictionary.

4. A computer-readable storage medium for storing information for translating contents described in e-mail into a language for accessing a database, and information for editing contents obtained from a database management system into e-mail, the database management system managing a database.
